Europäisches Patentamt

European Patent Office

Office européen des brevets

(19)

(11) Veröffentlichungsnummer : **0 011 722**
**B1**

(12) # EUROPÄISCHE PATENTSCHRIFT

(45) Veröffentlichungstag der Patentschrift :
11.05.83

(51) Int. Cl.³ : **B 41 J   3/04**

(21) Anmeldenummer : **79104229.4**

(22) Anmeldetag : **31.10.79**

(54) **Verfahren und Vorrichtung zum digitalen Steuern der Bildung farbiger Wiedergaben.**

(30) Priorität : **29.11.78 CH 12213/78**

(43) Veröffentlichungstag der Anmeldung :
**11.06.80 Patentblatt 80/12**

(45) Bekanntmachung des Hinweises auf die Patenterteilung : **11.05.83 Patentblatt 83/19**

(84) Benannte Vertragsstaaten :
**DE FR GB**

(56) Entgegenhaltungen :
**CH A 495 017**
**DE A 2 824 817**
**Patents Abstracts of Japan, Band 2, Nr. 134,**
**9. November 1978 Seite 8301E78**
**Patents Abstracts of Japan, Band 3, Nr. 127,**
**23. Oktober 1979 Seite 37E146**

(73) Patentinhaber : **International Business Machines Corporation**
**Armonk, N.Y. 10504 (US)**

(72) Erfinder : **Stucki, Peter**
**Wieswaldweg 27**
**CH-8135 Langnau/ZH (CH)**

(74) Vertreter : **Rudack, Günter O., Dipl.-Ing. et al**
**c/o International Business Machines Corporation**
**Zurich Patent Operations Säumerstrasse 4**
**CH-8803 Rüschlikon (CH)**

Verfahren und Vorrichtung zum digitalen Steuern der Bildung farbiger Wiedergaben

Die Erfindung betrifft ein Verfahren für die digitale Steuerung der Bildung von farbigen Wiedergaben für den Rasterdruck, sowie eine Vorrichtung zum Ausführen dieses Verfahrens. Unter « Rasterdruck » soll im Zusammenhang mit der vorliegenden Erfindung verstanden werden, dass eine endliche Anzahl von farbigen Halbton-Bildelementen gedruckt wird, wobei die Auswahl derart getroffen ist, dass das menschliche Auge aufgrund der ihm eigenen Auflösungsfähigkeit und seiner früheren Erfahrung beim Betrachten ähnlicher Bilder dazu tendiert getäuscht zu werden und so scheinbar ein Bild mit kontinuierlichem Farbübergang zu sehen und nicht ein gerastertes, d. h. « unterbrochenes » Farbbild.

Die Herstellung von Schwarz/Weiss-Bildern im Rasterdruck ist technisch einfach, und Drucker für diesen Zweck sind bekannt. Das Drucken von Farben ist jedoch weniger einfach, da es unmöglich ist, sämtliche Farbnuancen abzudrucken, zwischen denen das menschliche Auge unterscheiden kann. Man hat festgestellt, dass es für viele Zwecke vollkommen ausreichend ist, sieben Farben, einschliesslich Schwarz, (oder sogar weniger) abzudrucken, um ein Farbbild mit annehmbarer Qualität auf einem weissen Aufzeichnungsträger herzustellen, und dies, in dem man tatsächlich nur drei Farben abdruckt, was weiter hinten erläutert wird.

In der Drucktechnik ist seit langem bekannt, dass das menschliche Auge durch gewisse Moiré-Muster irritiert wird, die in Rasterbildern auftreten, wenn die Raster der verschiedenen Farbauszüge nicht oder nicht genügend gegenüber der horizontalen Richtung gedreht sind. Im modernen Rasterdruck werden die verschiedenen Farbauszüge auch gegeneinander verdreht.

Beim « Parallel »-Druck werden alle Punkte des ganzen Bildes, die zu einem Farbauszug gehören, gleichzeitig gedruckt. Danach werden alle Punkte eines zweiten (oder weiteren) Farbauszuges gedruckt, wobei die Orientierung des Rasters der zweiten oder weiteren Farbe von der Orientierung des Rasters der ersten Farbe weggedreht wird. Dieses Verfahren erfordert natürlich die Herstellung so vieler Druckformen wie Farben (einschliesslich Schwarz) gedruckt werden sollen, und ebensoviele Durchgänge des Aufzeichungsträgers durch den Drucker. Die genaue Ausrichtung dieser Druckormen bietet jedoch keine wesentlichen Schwierigkeiten.

Beim « Serien »-Druck werden die Bildelemente sequentiell durch Uebereinanderdrucken der erforderlichen Farben in der Form von Punkten zusammengesetzt. Diese Punkte werden nebeneinander abgesetzt, so dass sie Druckzeilen bilden, und eine genügend grosse Anzahl von Druckzeilen wird untereinander angeordnet, um das ganze Bild zu bilden.

Wegen der Notwendigkeit, für jede zu druckende Farbe ein individuelles Raster herzustellen, ist das parallele Druckverfahren von Natur aus sehr langsam. Im Gegensatz dazu ist der serielle Druckprozess viel schneller, jedoch schwieriger. Für das serielle Druckverfahren gibt es im wesentlichen zwei Typen von Druckern. Der erste Typ ist der Aufschlag-Drucker, bei dem eine Spalte oder Matrix von Drähten in einem gemeinsamen Druckkopf angeordnet ist, die individuell betätigt werden können, um gegen ein Farbband gedrückt zu werden, welches seinerseits gegen den Aufzeichnungsträger gedrückt wird, um darauf einen Punkt zu erzeugen. Das Farbband ist als Vielfarben-Band ausgebildet und enthält die erforderliche Anzahl von Druckfarben und Schwarz. Ein Farbbandhubmechanismus ist für die Präsentation derjenigen Farbe an der Drahtmatrix des Druckkopfes verantwortlich, welche gedruckt oder übergedruckt werden soll. Wegen der Zeit, die die mechanischen Teile des Drahtdruckers zur Bewegung brauchen, insbesondere wegen der Rückkehrzeit des Hammers, sind diese Drucker immer noch ziemlich langsam. Der andere Druckertyp arbeitet mit flüssigen Tinten in verschiedenen Farben, die von einem gemeinsamen Druckkopf abgegeben werden, in welchem für jede Druckfarbe einschliesslich Schwarz eine eigene Düse vorgesehen ist. Diese Art Drucker ist die zur Zeit schnellste, insbesondere wegen der jetzt erhältlichen sehr schnell trocknenden Tinten.

Wegen seiner Geschwindigkeit hat dieser Drucker die besten Voraussetzungen für die Benutzung in einer Farbbild-Wiedergabeanlage. Eine derartige Anlage kann entweder eine Farbkopiermaschine oder ein Farbbild-Faximile-Uebertragungssystem sein, was von dem Abstand zwischen Abtaster und Drukker abhängt. Obwohl die vorliegende Erfindung auch auf unabhängige Tintenstrahl-Drucker anwendbar ist, wird sie weiter unten am Beispiel eines Farbbild-Reproduktionssystems, nämlich einem Farbkopierer, beschrieben.

Zunächst soll kurz der konventionelle Farbbild-Reproduktionsprozess beschrieben werden. Das Farbbild-Original wird zunächst mittels eines Bandpassfilters in seine additiven Primärfarben Grün, Blau und Rot zerlegt, indem die Farb-« Amplitude », d. h. Farbintensität für alle Bildelemente in einen x-y-Raster des Originals gemessen wird. Dabei werden Intensitäten unterhalb eines gewissen Schwellenwertes vernachlässigt.

Für die Rekonstruktion des Bildes auf einem weissen Aufzeichnungsträger werden die subtraktiven Primärfarben Magenta (absorbiert Grün), Gelb (absorbiert Blau) und Cyan (absorbiert Rot) benutzt. Die diesen subtraktiven Primärfarben entsprechenden Halbton-Muster müssen auf der Kopie in der gleichen x-y-Position wie im Original exakt übereinandergesetzt werden, doch muss das Raster der Farben gegenüber der Horizontalen gedreht werden. Dieses Erfordernis kann mit den konventionellen analogen oder digitalen Farbbild-Reproduktionstechniken, die gedrehte Raster verwenden, nicht erfüllt werden. Daher ist bei der konventionellen Farbwiedergabe die Wiedergabetreue mangelhaft und ihre Korrektur erfordert aufwendige und schwierig zu implementierende Massnahmen, um das Farbgleichgewicht herzustellen.

Ein Verfahren zum Abtasten codierter Farbringe ist in der Schweizer Patentschrift 495.017 in Zusammenhang mit einem Verfahren zum Identifizieren von Ampullen, die pharmazeutische Produkte verschiedener Art enthalten, beschrieben. Die Ampullen tragen Ringe in den Farben Rot, Grün, Blau, Cyan, Magenta und Gelb. Der Abtaster benutzt dichroitische Spiegel um das von den Ringen reflektierte Licht in drei Spektralgebiete (Rot, Grün, Blau) aufzuteilen, und die von drei Photovervielfachern gelieferten und einen vorgegebenen Schwellenwert überschreitenden Farbsignale werden mittels eines selbsttaktierenden Systems digitalisiert. In dieser Patentschrift ist allerdings kein Rekonstruktionsmechanismus für die abgetastete Farbe gezeigt, d. h. ein Drucker ist nicht beschrieben.

Ein Tintenstrahl-Drucker mit drei Düsen für das Drucken von Rot, Gelb und Blau, die mit gegenseitigen Abständen von 120° um eine drehbare Trommel angeordnet sind, auf welcher der Aufzeichnungsträger fixiert ist, ist in der Schweizer Patentschrift 468.630 beschrieben, welche die Ausbildung von Ablenkelektroden für die Ablenkung der nicht zum Drucken benutzten Tropfen in eine Auffangvorrichtung lehrt. Das Problem fehlerhafter Farbbildüberlappungen wird hier überhaupt nicht discrutiert geschweige eine entsprechende Kompensationsschaltung beschrieben.

Die Schweizer Patentschrift 537.757 betrifft einen Tintenstrahl-Drucker mit einem Druckkopf, der eine Vielzahl paralleler Düsen in linerarer oder Matrix-Anordnung aufweist. Die Patentschrift beschreibt die Ausbildung einer doppelten Zuführungskammer und erwähnt kurz die Ausrichtung der von verschiedenen parallelen Düsen abgegebenen Tropfen durch verzögerung der Betätigung der Düsen, so dass die Tropfen den Aufzeichnungsträger an der korrekten Stelle erreichen. Ausserdem wird die Möglichkeit erwähnt, verschiedene Farben zum Drukken zu verwenden, wobei die Farben sich entweder auf dem Aufzeichnungsträger mischen oder nebeneinander abgesetzt werden können.

Aus den Patent Abstracts of Japan, Band II, Nr. 134 vom 9. November 1978 ist ein Verfahren zum digitalen Steuern der Bildung farbiger Wiedergaben mittels eines Tintenstrahl-Druckers ablesbar, das sämtliche Verfahrensschritte gemäss dem Oberbegriff des vorliegenden Anspruches 1 aufweist. Bei diesem bekannten Verfahren werden die Markierungen laufend mittels eines opto-elektrischen Abtasters abgetastet, der die zuletzt aufgebrachte Markierung abfühlt und mittels seines so gewonnenen Ausgangssignals den Tintenstrahl-Druckkopf neu aktiviert, um eine gegenüber der vorhergehenden Markierung innerhalb genauer Grenzen versetzte neue Markierung zu erhalten.

Ein bei Seriendruckern mit Tintenstrahlen in verschiedenen Farben auftretendes ernstes Problem betrifft die örtliche Dilatation, die bei den meisten Aufzeichnungsträgern auftritt, wenn sie von Tintentropfen getroffen werden. Diese Dilatation macht es sehr schwierig, die folgenden Tintentropfen (der zweiten und weiteren Farben) an der gleichen Stelle präzise auszurichten. Da die Inhalte der zu reproduzierenden Bilder sehr stark variieren, gibt es keine Möglichkeit, die Dilatation durch geeignete mechanische Kompensationsmassnahmen zu antizipieren. Ferner variieren auch der Betrag und die Hauptrichtung der Dilatation in unvohersehbarer Weise, da sie von den vorherrschenden Umgebungsbedingungen und von Herstellungsparametern abhängen.

Keine der dem Stand der Technik angehörenden Veröffentlichungen geht dieses Problem an, dessen Lösung jedoch von grosser Wichtigkeit für die Verbesserung der Druckqualität beim Farbdruck mit Tintenstrahl-Druckern ist. Es ist deshalb ein Hauptzweck der vorliegenden Erfindung, ein Verfahren für die digitale Farbbild-Wiedergabe anzugeben, welches die automatische Kompensation von Fehlausrichtungen des zweiten und der folgenden Tropfen mit dem zuerst gedruckten Tropfen gestattet, wenn diese Tropfen alle am gleichen Ort gedruckt werden sollen. Einzelheiten von Ausführungsbeispielen der Erfindung werden hiernach mit Bezug auf die beigefügten Zeichnungen beschrieben.

Figur 1 ist ein schematisches Blockschaltbild eines Farbbild-Wiedergabesystems;

Figur 2 ist ein Blockschaltbild einer erfindungsgemäßen Steuerschaltung für die Tintenstrahldüsen;

Figur 3 zeigt Beispiele von korrekt ausgerichteten Druckfarben;

Figuren 4, 5 und 6 zeigen Druckfarben mit Fehlausrichtungen;

Figur 7 zeigt ein weiteres Ausführungsbeispiel einer Steuerschaltung für die Tintenstrahldüsen.

Beim Vielfarbendruck mit Tintenstrahl-Druckern kommt entweder das « additive » oder « subtraktive » Verfahren zur Anwendung, je nachdem welche Gruppe von Primärfarben benutzt wird. Beispielsweise wird in der oben erwähnten Schweizer Patentschrift 468.630 die Benutzung der additiven Primärfarben Rot, Gelb und Blau vorgeschlagen. Die vorliegende Erfindung bevorzugt die Benutzung der subtraktiven Primärfarben Magenta, Gelb und Cyan. Bekanntlich ergibt die Superposition von Magenta (welches Grün absorbiert) und Gelb (welches Blau absorbiert) Rot, die Superposition von Magenta und Cyan (welches Rot absorbiert) ergibt Blau, die Superposition Gelb und Cyan ergibt Grün, und die Superposition aller drei Farben ergibt Schwarz.

Daher ist es möglich, bei Benutzung von Magenta, Gelb und Cyan als Druckfarben Farbbilder zu rekonstruieren, welche neben diesen Druckfarben auch Rot, Blau, Grün und Schwarz, d. h. ein Total von sieben Farben enthalten. Dabei muss offensichtlich die Superposition der Druckfarben sehr exakt erfolgen, um eine Farbverschiebung oder das Auftreten eines unerwünschten Farbtons zu vermeiden.

Man hat bereits seit langem beobachtet, dass Druckraster, deren Orientierung in der Leserichtung (oder orthogonal dazu) liegt, die Tendenz haben, Moiré-Muster zu erzeugen, deren Frequenz meist sehr tief liegt, d. h. in einem Gebiet, in welchem das menschliche Auge am empfindlichsten ist. Daher benutzt die Druckindustrie unterschiedliche Drehwinkel für die einzelnen Farben, um die Frequenz der Moiré-Muster zu erhöhen, so dass sie für das menschliche Auge weniger auffällig sind. Neuere Untersuchungen durch den Erfinder haben gezeigt, dass digitale Farbbilder mit gedrehten Rastern gegenüber mechanischen Ungenauigkeiten sehr resistent sind, und dass ein Moiré-freies, farbtreues Bild mit guter Gesamtqualität auch dann erzeugt werden kann, wenn die subtraktiven Primärfarben Magenta, Gelb und Cyan alle unter dem gleichen Winkel von 45° orientiert sind.

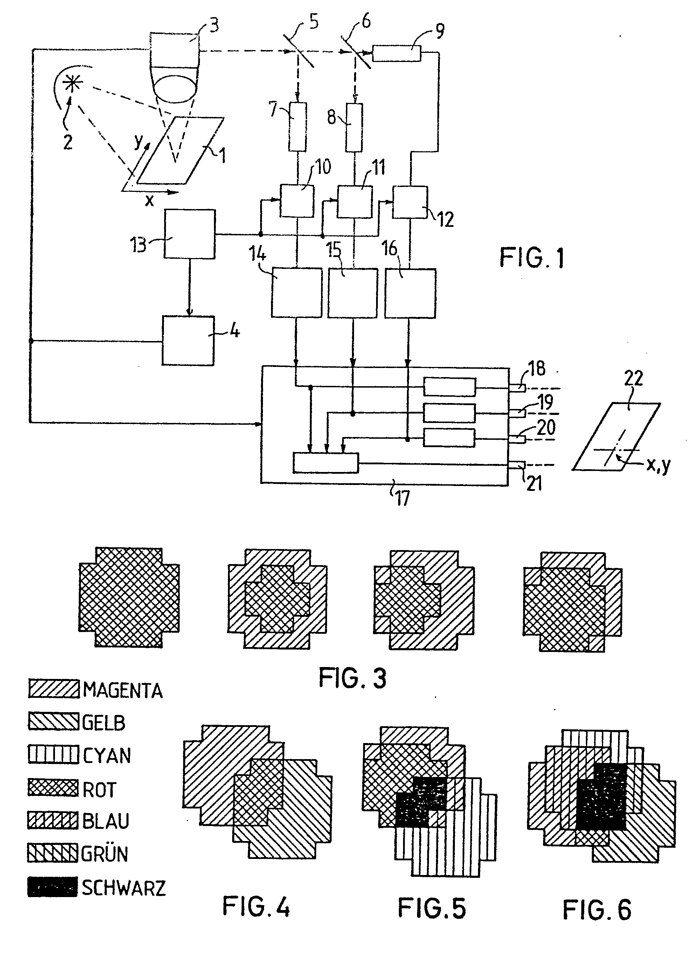

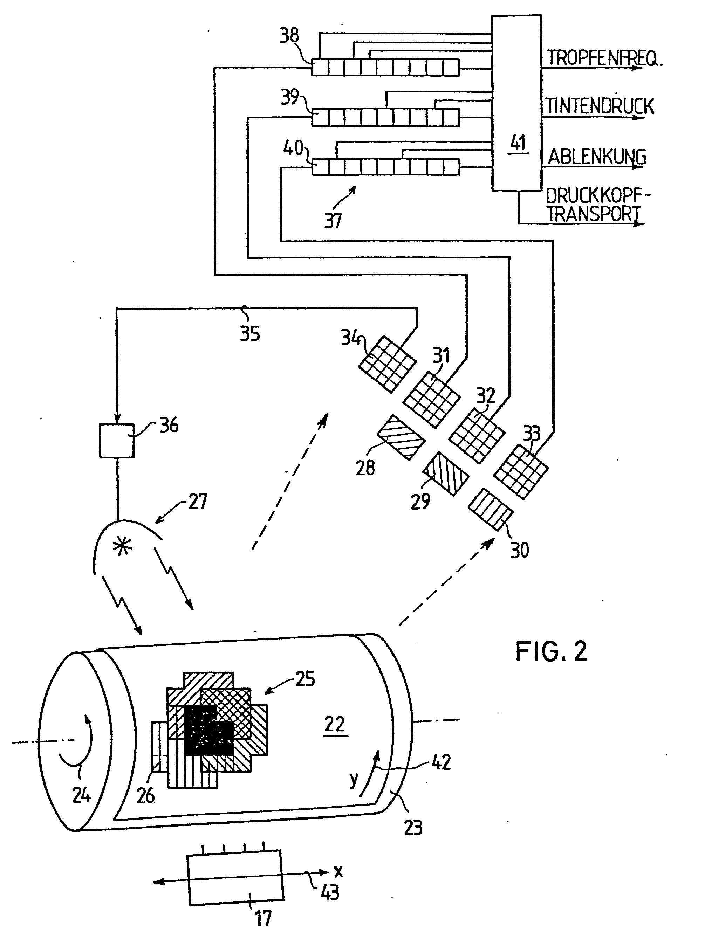

Fig. 1 zeigt eine aus konventionellen Elementen aufgebaute Wiedergabevorrichtung, mit welcher die zu beschreibende Erfindung benutzt werden kann. Ein Original 1 wird von einer Lichtquelle 2 beleuchtet und mit einem Abtaster 3 abgetastet, dessen Abtastposition durch eine Steuereinheit 4 so gesteuert wird, dass er die Bildelemente des Originals 1 sequentiell abtastet. Das optische Ausgangssignal des Abtasters 3 wird nun im Sinne eines Bandpass-Filters in seine additiven Primärfarben Grün, Blau und Rot zerlegt, indem es durch dispersive Mittel geleitet wird, wie einen ersten dichroitischen Spiegel 5, welcher den Grünanteil ausscheidet, und einen zweiten dichroitischen Spiegel 6, welcher den Blauanteil aus dem Ausgangssignal des Abtasters ausscheidet.

Die Grün- und Blauanteile, die durch die dichroitischen Spiegel 5 und 6 reflektiert werden, wie auch der Rotanteil, welcher durch beide Spiegel 5 und 6 hindurchgegangen ist, werden mittels den Farbkanälen individuell zugeordneten Photovervielfachern 7, 8 und 9 verstärkt. Die elektrischen Ausgangssignale der Photovervielfacher 7, 8 und 9 werden durch Schwellenschaltungen 10, 11 und 12 hindurchgeleitet. Diese werden durch einen gemeinsamen Taktgeber 13 getaktet, der auch mit der Positions-Steuereinheit 4 verbunden ist.

Die Ausgangssignale der Schwellenschaltungen 10, 11 und 12 stellen daher die digitalisierten Werte der Farbtönung der Grün-, Blau- und Rotanteile eines jeden Bildelements des Originals 1 dar. Für den Druck werden diese Farbtönungswerte der additiven Primärfarben zunächst in ihre äquivalenten Halbtonrepräsentationen umgesetzt. Der digitalisierte Farbtönungswert wird in eine angemessene Anzahl von Amplitudenwerten quantisiert und diese werden mit vorgegebenen Schwellenwerten verglichen, um binäre Ausgangssignale zu erzeugen, die angeben, ob die betreffende Farbe an der abgetasteten Stelle die Schwellenwerte überschreitet. Wie bereits erwähnt, muss bei der Farbwiedergabe das Raster der Bildelement-Matrix gegenüber der Horizontalen gedreht werden, damit kein unerwünschtes Moiré-Muster entsteht. Der Algorithmus für die Erzeugung einer 45°-Drehung, wie im vorliegenden Fall, ist einfach und für den Fachmann naheliegend. Eine Anweisung zum digitalen Erzeugen von Drehungen irgendeiner Grösse hat der Erfinder im IBM Technical Dislocure Bulletin Band 20 Nr. 6, November 1977, Seiten 2423-2425 veröffentlicht.

Die resultierenden binären Ausgangssignale, welche für die Intensitäten der additiven Primärfarben repräsentativ sind, werden zur Steuerung von deren korrespondierenden subtraktiven Primärfarben benutzt, d. h. dass « Grün »-Signal steuert das Drucken von Magenta, das « Blau »-Signal steuert das Drucken von Gelb, das « Rot »-Signal steuert das Drucken von Cyan. Diese Steuerung erfolgt über konventionelle Druck-Steuereinheiten 14, 15 und 16, deren Ausgänge an einen Vielfarben-Tintenstrahl-Drucker 17 angeschlossen sind.

Der Drucker 17 weist alle Elemente auf, die im allgemeinen in jedem konventionellen Tintenstrahl-Drucker vorhanden sind, wie eine Tintenzuführungsvorrichtung mit Reservoir, Mittel zum Aufrechterhalten eines geeigneten Tintendrucks, Tropfenerzeugungs- und Ablenkmittel. Der Drucker 17 hat für jede Druckfarbe eine eigene Düse 18, 19, 20 und bei Bedarf eine zusätzliche Düse 21 für Schwarz zur Kontrastverbesserung.

Diese Düsen sind so ausgerichtet, dass die von ihnen abgegebenen Tropfen, die für die gleiche x, y Koordinate des zu rekonstruierenden Bildelementes vorgesehen ist, den Aufzeichnungsträger 22 zu verschiedenen Zeiten erreichen, wobei die dazwischenliegenden Zeitintervalle für das Trocknen der Tinte und den Transport des Aufzeichnungsträgers 22 benutzt werden. Der Drucker 17 und der (nicht gezeigte) Transportmechanismus für den Aufzeichungsträger 22 erhalten Steuersignale von der Steuereinheit 4, welche dafür sorgen, dass die Korrespondenz zwischen der x, y-Druckposition und der x, y-Abtastposition erhalten bleibt.

Natürlich kann diese Steuerung nicht diejenigen Abweichungen der Druckposition bewältigen, die durch das Nasswerden des Aufzeichnungsträgers beim Abdrucken der ersten Farbe entstehen, und die in einer kleinen Dilatation und damit Verschiebung der Tropfen der zweiten (und dritten) Farbe von der wirklichen Druckposition, resultieren, wodurch eine Farbverschiebung oder eine Verfärbung in einer oder mehreren Farben auftritt.

Die Erfindung lehrt daher die laufende Ueberwachung des Abdrucks am Aufzeichnungsträger und die Entwicklung eines geeigneten Korrektursignals, mit dem die Stellung des Druckers 17 bezüglich des Aufzeichnungsträger 22 korrigiert werden kann und zur Beeinflussung der Abgabezeiten der zweiten und dritten Druckfarbe.

Fig. 2 zeigt schematisch ein erstes Ausführungsbeispiel einer Ueberwachungseinrichtung gemäss der vorliegenden Erfindung. Der Aufzeichnungsträger 22 ist auf einem geeigneten Support gehalten, wie beispielsweise einer rotierenden Trommel 23. Die Trommel 23 wird durch konventionelle, steuerbare Antriebsmittel (nicht gezeigt) in Richtung des Pfeils 23 angetrieben. Ein Teil 25 des wiedergegebenen Bildes besteht aus einer Vielzahl von gedruckten Punkten, die der Einfachheit halber als Quadrate 26 dargestellt sind. Jeder der gedruckten Punkte wird durch einen Blitz weissen Lichts von einen Stroboskop 27 beleuchtet, und das vom Aufzeichnungsträger 22 reflektierte Licht, welches die auf dem betreffenden gedruckten Punkt 26 vorhandenen Druckfarben passiert hat, wird durch eine Gruppe von Filtern, nämlich Magenta-Filter 28, Gelb-Filter 29 und Cyan-Filter 30, auf einen zweidimensionalen Lichtdetektor geworfen, der beispielsweise die ladungsgekoppelten flächenhaften Vorrichtungen 31, 32 und 33 umfassen kann. Diese transformieren die empfangenen Spektralanteile in elektrische Signale.

Eine vierte Lichtdetektor-Fläche 34 ist für die Abtastung der räumlichen Position der übereinanderliegenden Halbton-Muster vorgesehen. Die Fläche 34 liefert ein Ausgangssignal über eine Leitung 35 an eine Stroboskop-Steuereinheit 36, welche die Blitzfrequenz steuert, um die Halbton-Muster im Zentrum der Detektorflächen 31 bis 33 zu halten.

Die von den Flächen 31 bis 33 gelieferten Ausgangssignale werden einem Verzögerungsnetzwerk 37 zugeführt, welches aus angezapften Schieberegistern 38, 39 und 40 aufgebaut ist, deren Ausgänge an eine Steuereinheit 41 angeschlossen sind, welche ihrerseits Steuersignale an den Tintentropfen-Generator, d. h. den piezoelektrischen Kristall für die Steuerung der Tropfenfrequenz, an die Pumpe für die Steuerung des Tintendrucks, und an die Ablenkvorrichtung liefert, alles für die Korrektur des Tintenstrahls in der durch den Pfeil 42 bezeichneten y-Richtung, und an die Transportvorrichtung des Tintenstrahl-Druckkopfes, für die Korrektur in der durch den Pfeil 43 bezeichneten x-Richtung.

Die Fign. 3 bis 6 zeigen Beispiele für die Farb-(Fehl-) Ausrichtung und die Korrekturstrategie. In Fig. 3 liegen die Farben jeweils in Superposition, und obwohl die von den einzelnen Farben eingenommenen Flächen teilweise unterschiedliche Grösse aufweisen, ist keine Korrektur erforderlich. Fig. 4 zeigt eine Situation, in welcher zwei Farben gegeneinander versetzt sind, in Fig. 5 sind zwei Farben miteinander ausgerichtet während eine dritte fehlausgerichtet ist, und Fig. 6 zeigt alle drei Farben gegeneinander versetzt. Natürlich ist in den Fällen der Fign. 4 bis 6 eine Korrektur erforderlich. Beim Drucken mit den subtraktiven Primärfarben Gelb, Magenta und Cyan, in dieser Reihenfolge, können die folgenden Fälle auftreten :

1. Falls nur eine der Farben zu drucken ist, fällt Licht nur durch das dieser Farbe zugeordnete Filter 28, 29 oder 30 (Fig. 2) auf den zugehörigen Lichtdetektor 31, 32 oder 33. Die Intensität des Lichts ist in diesem Fall ein Maximum. Es muss jedoch von der Steuereinheit 41 kein Korrektursignal erzeugt werden, da keine Fehlausrichtung einer Farbe bezüglich einer andern aufgetreten ist.

2. Falls zwei Farben zu drucken sind, können sie entweder miteinander ausgerichtet (Fig. 3) oder fehlausgerichtet (Fig. 4) sein. Im ersteren Fall kann kein Licht eins der Filter 28 bis 30 passieren, da eine der Farben überhaupt nicht vorkommt und die beiden andern sich zu Rot, Grün oder Blau mischen, wofür alle Filter undurchlässig sind. Im Fall der Fehlausrichtung der beiden Farben fällt durch die ihnen zugeordneten Filter Licht geringer Intensität, und die zugehörigen Lichtdetektoren 31, 32 oder 33 werden Ausgangssignale abgeben, aus denen die Steuereinheit 41 Korrektursignale erzeugt.

3. Im Fall des Druckes aller drei Farben können drei Situationen auftreten, nämlich a) alle drei Farben sind miteinander ausgerichtet, b) zwei der Farben sind miteinander ausgerichtet und die dritte ist bezüglich der Ersteren fehlausgerichtet (Fig. 5), oder c) zwei Farben sind bezüglich der zuerst gedruckten Farbe je fehlausgerichtet (Fig. 6), und ferner sind sie untereinander fehlausgerichtet.

a) Genaue Ausrichtung aller drei Farben ergibt Schwarz, ein Ausgangssignal wird nicht erzeugt.

b) Die beiden miteinander ausgerichteten Farben mischen sich zu einer neuen Farbe (Rot, oder Grün, oder Blau), für welche alle Filter undurchlässig sind. An der Stelle, an welcher alle drei Farben sich überdecken, ergibt sich Schwarz. Daher wird nur das Filter der fehlausgerichteten Farbe ein kleines Ausgangssignal liefern.

c) Wenn alle drei Farben gegenseitig fehlausgerichtet sind, ergibt sich eine schwarze Zone, die kein Ausgangssignal erzeugt, und es gibt drei Zonen mit neuen Farben (Rot, Grün, Blau), die von den Filtern gesperrt werden, und es gibt drei kleine Ausgangssignale, die von den Stellen herrühren, an welchen sich die Druckfarben nicht überdecken.

Daraus ergibt sich, dass entweder ein grosses Ausgangssignal für eine allein zu druckende Farbe vorhanden sein kann oder ein kleines Ausgangssignal, das durch eine fehlausgerichtete Farbe verursacht wird. Um die Position einer als zweite oder folgende gedruckten Farbe bezüglich der zuerst gedruckten zu korrigieren, wird das Stroboskop 27 nur während des Auftrags der zweiten oder folgenden Farbe eingeschaltet. Auf diese Weise wird die Erzeugung eines grossen Ausgangssignals für die zuerst gedruckte Farbe vermieden.

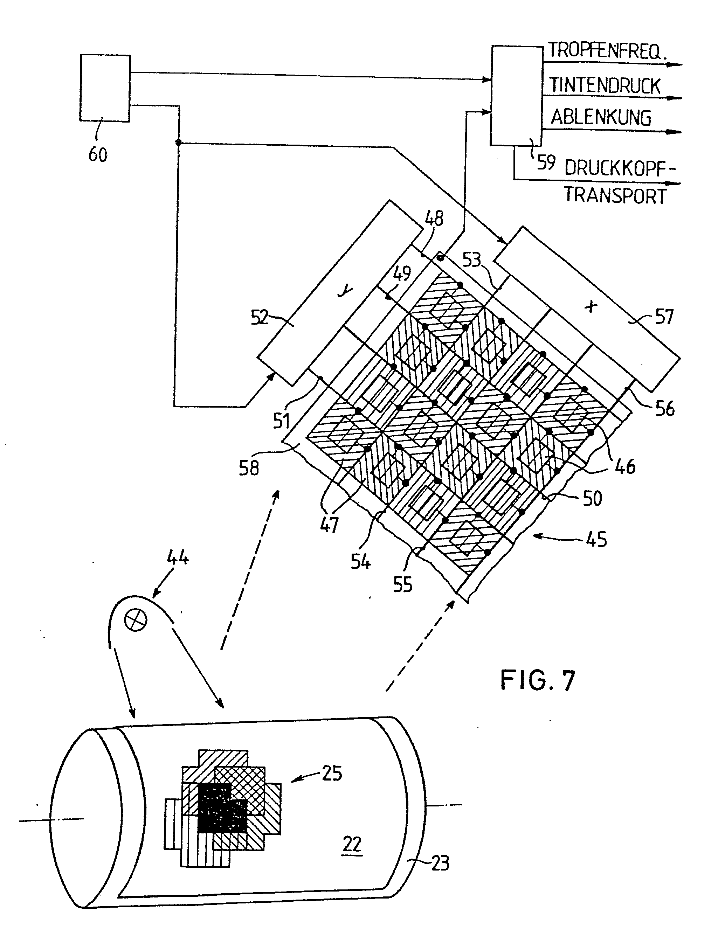

Fig. 7 zeigt ein weiteres Ausführungsbeispiel der optischen Einrichtung zum Erkennen einer Positionsabweichung, worin das Stroboskop 27 durch eine dauernd weisses Licht abgebende Lichtquelle 44 ersetzt ist, die beispielsweise eine Glühlampe sein kann. Das vom Aufzeichnungsträger 22 reflektierte und durch die auf diesen gedruckte Druckfarbe gefilterte Licht fällt auf einen Flächenabtaster 45, welcher aus einer x-y-Matrix von lichtempfindlichen Elementen 46 besteht, die mit Filtermasken 47 verschiedener Farben gemäss Fig. 7 bedeckt sind. Die Masken können aus dünnen Schichten farbigen Films bestehen. Die lichtempfindlichen Elemente 46 können beispielsweise als ladungsgekoppelte Kondensatoren ausgebildet sein, welche die lichterzeugten Ladungen speichern. Die Kondensatoren 46 jeder der horizontalen Matrixreihen sind an eine der gemeinsamen Leitungen 48, 49, 50 und 51 angeschlossen, welche ihrerseits an einen Vertikal-(y)-Abtastgenerator 52 angeschlossen sind, während die Kondensatoren 46 jeder der vertikalen Spalten der Matrix an eine der gemeinsamen Leitungen 53, 54, 55 und 56 angeschlossen sind, die ihrerseits mit einem Horizontal-(x)-Abtastgenerator 57 verbunden sind.

Falls Impulse von den Vertikal- und Horizontal-Abtastgeneratoren 52 und 57 in der geeigneten Reihenfolge an einem x,y-Matrixpunkt koinzidieren, wird die zuvor an diesem Punkt gespeicherte integrierte photoelektrische Ladung in ein Substrat 58 abgeleitet, auf dem die Kondensatoren 46 angeordnet sind, und ein entsprechender Videostrom wird aus dieser Ladung erzeugt. In dem Buch von C.H. Séquin, M.F. Tompsett, « Charge Transfer Devices, Advances in Electronics and Electron Physics, Academic Press, New York 1975 », sind weitere Ladungstransfer-Vorrichtungen beschrieben.

Die Funktion des in diesem Ausführungsbeispiel ersetzten Stroboskops wird durch eine gepulste Beleuchtungs-/Leseschaltung 59 ausgeführt, die von einem Taktgeber 60 gesteuert wird, der auch die Abtastgeneratoren 52 und 57 steuert. Die Beleuchtungs-/Leseschaltung 59 liefert Ausgangssignale für die Steuerung der Tropfenbildungsfrequenz, für die Steuerung des Tintendrucks, für die Steuerung der Tropfenablenkvorrichtung und für die Steuerung der Druckkopftransportvorrichtung auf der Basis elektronischer Sortierung der Ladungsverteilung für die als zweite und folgende gedruckten Farben. Wie im Ausführungsbeispiel mit dem Stroboskop muss das Resultat der Abtastung der zuerst gedruckten Farbe unterdrückt werden, was in dem zuletzt beschriebenen Ausführungsbeispiel auf elektronische Weise geschieht.

## Ansprüche

1. Verfahren zum digitalen Steuern der Bildung farbiger Wiedergaben mittels eines Tintenstrahl-Druckers, der wenigstens drei verschiedene farbige Tinten benutzt, die von individuellen, in einem gemeinsamen Druckkopf angeordneten Düsen abgegeben werden, bei dem der Druckkopf gegenüber einem Aufzeichnungsträger verschiebbar angeordnet ist und die von den Düsen abgegebenen Tintentropfen auf dem Aufzeichnungsträger superponiert werden, um Halbton-Bildelemente in den gewünschten zusammengesetzten, d. h. additiven oder subtraktiven Primärfarben oder anderen Farben zu bilden, und bei dem die auf den Aufzeichnungsträger gedruckten Markierungen mit weissem Licht beleuchtet und laufend mittels eines opto-elektrischen Abtasters abgetastet werden, dadurch gekennzeichnet, dass der Abtaster (31 ... 33, 45) für die einzelnen Farben der verschiedenen Drucktinten speziell empfindliche Sektionen aufweist, dass die Beleuchtung und/oder die Abtastung zeitlich so erfolgen, dass die Abtastung nur während des zweiten oder folgenden Farbauftrags stattfindet, und dass die wahrgenommenen Spektralkomponenten in elektrische Signale umgewandelt werden, welche einerseits die Frequenz- und/oder Phasenbeziehungen der Tropfenerzeuger für die einzelnen Farben, den Tintendruck und die den Düsen (18, 19, 20) individuell zugeordnete Ablenkelektronik für die Korrektur der Tropfenabsetzung in der (y-)Richtung der Bewegung des Aufzeichnungsträgers (22) und andererseits den Antrieb des Druckkopfes (17) für die Korrektur der Tropfenabsetzung in (x-)Richtung quer zur Bewegungsrichtung des Aufzeichnungsträgers (22) steuern.

2. Vorrichtung zum digitalen Steuern der Bildung farbiger Wiedergaben mittels eines Tintenstrahl-Druckers mit wenigstens drei verschiedenen additiven oder subtraktiven Primärfarben oder anderen Farben zugeordneten Düsen, die in einem gemeinsamen vor einem Aufzeichnungsträger verschiebbaren Druckkopf angeordnet sind, wobei die Tintentropfen von den Düsen superponiert werden, um Halbton-Bildelemente in den gewünschten zusammengesetzten, d. h. additiven oder subtraktiven Primärfarben oder anderen Farben zu bilden, und ein opto-elektrischer Abtaster den auf den Aufzeichnungsträger gedruckten Markierungen gegenüberliegt, dadurch gekennzeichnet, dass eine gesonderte Quelle (27, 44) weissen Lichts vorgesehen ist, welche auf die auf den Aufzeichnungsträger (22) gedruckten Markierungen (25) gerichtet ist, dass der opto-elektrische Abtaster (31 ... 34, 45) eine Anzahl lichtempfindlicher Sektionen (31 ... 33, 46) aufweist, die eingangsseitig verschiedene Farbfilter (28 ... 30, 47) tragen, deren Anzahl der Anzahl der Farben der verschiedenen Drucktinten gleich ist und deren gegenseitig unterschiedliche Färbungen diesen Drucktintenfarben entsprechen, und dessen Ausgänge an eine Steuerschaltung (41, 59) angeschlossen sind, deren Ausgänge wiederum mit den Steuereingängen der Tropfenerzeuger, der Tintenzuführungen und der Ablenkelektronik sowie mit dem Antrieb des Druckkopfes (17) des Tintenstrahl-Druckers verbunden sind, und dass die Lichtquelle (27, 44) und/oder der Abtaster (31 ... 34, 45) zeitlich so ansteuerbar ausgebildet ist, dass die Abtastung nur während des zweiten oder folgenden Farbauftrags erfolgen kann.

3. Vorrichtung nach Anspruch 2, dadurch gekennzeichnet, dass die Lichtquelle (27) als Weisslicht-Stroboskop ausgebildet ist, und dass der opto-elektrische Abtaster eine Gruppe von ladungsgekoppelten Vorrichtungen (31 ... 33) aufweist, denen die unterschiedlichen Farbfilter (28 ... 30) einzeln vorgeschaltet sind und die mit je einer Schieberegister-Verzögerungsleitung (38 ... 40) verbunden sind, deren ausgangsseitige Anzapfungen an die Eingänge der Steuerschaltung (41) angeschlossen sind (Fig. 2).

4. Vorrichtung nach Anspruch 2, dadurch gekennzeichnet, dass die Lichtquelle (44) als Glühlampe ausgebildet ist, und dass der opto-elektrische Abtaster (45) eine Matrix von auf einem Substrat (58) angeordneten lichtempfindlichen Elementen (46) aufweist, wobei die Elemente (46) jeder der Spalten der Matrix (45) mit einem ersten Satz gemeinsamer Leitungen (48 ... 51) verbunden sind, die an einen Vertikal-Abtastgenerator (52) angeschlossen sind, und die Elemente (46) jeder der Reihen der Matrix (45) mit einem zweiten Satz gemeinsamer Leitungen (53 ... 56) verbunden sind, die an einen Horizontal-Abtastgenerator (57) angeschlossen sind, dass sämtliche lichtempfindlichen Elemente (46) mit individuellen, den Drucktintenfarben entsprechenden Farbfilter-Masken (47) überdeckt sind, wobei die Verteilung der Farben der Filter (47) über die Fläche der Matrix (45) gleichmässig abwechselt, und dass das Substrat (58) an die Steuerschaltung (59) angeschlossen ist, die von einem Taktgeber (60) getaktet ist, der auch die beiden Abtastgeneratoren (52 und 57) taktmässig entsprechend ansteuert (Fig. 7).

## Claims

1. Method for digitally controlling the colour image formation by means of an ink jet printer using at least three differently coloured inks ejected from individual nozzles of a common print head mounted displaceable across a record medium, the ink droplets from the said nozzles being superpositioned on said record medium to form half-tone picture elements of desired composition, i. e. additive or subtractive primaries or any other colours, the indicia on the record medium being illuminated with white light and being monitored with an opto-electric scanning device, characterized in that said scanning device (31 ... 34, 45) has sections individually sensitive to a particular one of the printing colours, that the illumination and/or the scanning are timed such that the scanning can occur only during the second or subsequent colour deposition operation, and that the spectral components sensed are transformed into electric signals which control the frequency and/or phase relationship of the ink drop generators for the individual colours, the ink pressure, and the electronic deflection associated with the individual ink jet nozzles (18, 19, 20) for correcting the drop deposition in the (y-)direction of movement of the record medium (22) on the one hand, and which on the other hand control the drive mechanism of the print head assembly (17) for correcting the drop deposition in the (x-)direction transversal to the movement of the record medium (22).

2. Apparatus for digitally controlling the colour image formation by means of an ink jet printer having at least three nozzles individually associated with different additive or subtractive primaries or any other colour inks and arranged in a common head assembly mounted displaceable in front of a record medium, the ink droplets from said nozzles being superpostioned to form half-tone picture elements of desired composition, i. e. additive or subtractive primaries or any other colours, and an opto-electric scanning device arranged facing the indicia printed on the record medium, characterized in that a separate source (27, 44) of white light is provided and directed at the indicia (25) printed on the record medium (22), that the opto-electric scanning device (31 ... 34, 45) has a plurality of light-sensitive sections (31 ... 33. 46) bearing at their input different colour filters (28 ... 30, 47) the number of which corresponds to the number of different printing colours, and the mutually different colours of which correspond to these printing colours, the outputs of the scanning device (31 ... 34, 45) being connected to control circuitry (41, 59) the outputs of which are in turn connected to the control inputs of the ink drop generators, of the ink supplies and of the electronic deflection as well as to the print head drive controls of the ink jet printer (17), and that the light source (27, 44) and/or scanning device (31 ... 34, 45) are designed so as to be time-controllable such that scanning can occur only during the second or subsequent colour deposition.

3. Apparatus according to claim 2, characterized in that the light source (27) consists of a white-light stroboscope and that the opto-electric scanning device comprises a group of charge-coupled devices (31 ... 33) which are each covered with a different colour filter (28 ... 30) and connected each to a tapped delay line shift register (38 ... 40) the taps of which are in turn connected to the inputs of a controller (41) (Fig. 2).

4. Apparatus according to claim 2, characterized in that the light source (44) consists of an incandescent lamp, and that the opto-electric scanning device (45) comprises a matrix of light-sensitive devices (46) mounted on a substrate (58), the devices (46) of each column of the matrix (45) being connected to a first set of common lines (48 ... 51), which lines are connected to a vertical scan generator (52), the devices (46) of each row of the matrix (45) being connected to a second set of common lines (53 ... 56), which lines are connected to a horizontal scan generator (52), that all of the light-sensitive devices (46) are covered by individual colour filter masks (47) corresponding to the printing colour inks such that the distribution of the colours of the filters (47) is uniform about the matrix (45), and that the substrate (58) is connected to the control circuit (59) which is being timed by a clock (60) which also times the two scan generators (52 and 57) correspondingly (Fig. 7).

## Revendications

1. Procédé de commande numérique de la réalisation d'images en couleurs au moyen d'une imprimante à jet d'encre qui utilise au moins trois encres de couleurs différentes qui sont délivrées par des buses individuelles disposées dans une tête d'impression commune montée de façon mobile par rapport à un support d'enregistrement et où les gouttes d'encre délivrées par les buses sont superposées sur le support d'enregistrement pour réaliser des éléments d'image en demi-teintes dans les couleurs primaires composées voulues, c'est-à-dire additives ou soustractives, ou d'autres couleurs, et dans lequel les marquages imprimés sur le support d'enregistrement sont éclairés à la lumière blanche et explorés de manière continue au moyen d'un dispositif d'exploration opto-électrique, caractérisé par le fait que le dispositif d'exploration (31 ... 34, 45) présente des sections sensibles individuellement aux diverses couleurs des différentes encres d'impression, que l'éclairage et/ou l'exploration sont décalés dans le temps de telle sorte que l'exploration n'a lieu que pendant la deuxième application de couleur, ou celle qui suit, et que les composantes spectrales perçues sont converties en signaux électriques qui commandent, d'une part, les rapports de fréquence et/ou de phase des générateurs de gouttes pour les différentes couleurs, la pression d'encre et l'électronique de déviation, individuellement associée aux buses (18, 19, 20) pour la correction du dépôt de gouttes dans le sens (y) du mouvement du support d'enregistrement (22) et, d'autre part, l'entraînement de la tête d'impression (17) pour la correction du dépôt de gouttes dans le sens (x) transversal, par rapport au mouvement du support d'enregistrement (22).

2. Dispositif pour la commande numérique de la réalisation d'images en couleur au moyen d'une imprimante à jet d'encre avec au moins trois buses affectées à des couleurs primaires additives ou soustractives différentes ou à d'autres couleurs, qui sont disposées dans une tête d'impression commune mobile en regard d'un support d'enregistrement, les gouttes d'encre étant superposées par les buses pour réaliser des éléments d'image en demi-teintes dans les couleurs primaires composées voulues, c'est-à-dire additives ou soustractives, ou d'autres couleurs, et un dispositif d'exploration opto-électrique étant disposé en regard des marquages imprimés sur le support d'enregistrement, caractérisé par le fait qu'il est prévu une source (27, 44) séparée de lumière blanche qui est dirigée sur les marquages (25) imprimés sur le support d'enregistrement (22), que le dispositif d'exploration opto-électrique (31 ... 34, 45) présente un nombre de sections photosensibles (31 ... 33, 46) qui portent, du côté de l'entrée, des filtres de couleur différents (28 ... 30, 47) dont le nombre est égal au nombre des couleurs des différentes encres d'impression et dont les colorations différentes correspondent à ces couleurs d'encre d'impression, et dont les sorties sont raccordées à un circuit de commande (41, 59) dont les sorties sont reliées, à leur tour, aux entrées de commande des générateurs de gouttes, des amenées d'encre et de l'électronique de déviation ainsi qu'à l'entraînement de la tête d'impression (17) de l'imprimante à jet d'encre, et que la source lumineuse (27, 44) et/ou le dispositif d'exploration (31 ... 34, 45) sont réalisés pour pouvoir être commandés dans le temps de telle sorte que l'exploration ne peut avoir lieu que pendant la deuxième application de couleur ou celle qui suit.

3. Dispositif selon la revendication 2, caractérisé par le fait que la source lumineuse (27) revêt la forme d'un stroboscope à lumière blanche et que le dispositif d'exploration opto-électrique comporte un groupe de dispositifs (31 ... 33) à couplage de charge auxquels les différents filtres de couleur sont individuellement couplés en amont et lesquels sont reliés, respectivement, à une ligne à retard à registre à décalage (38 ... 40) dont les prises du côté sortie sont raccordées aux entrées du circuit de commande (41) (figure 2).

4. Dispositif selon la revendication 2, caractérisé par le fait que la source lumineuse (44) revêt la forme d'une lampe à incandescence et que le dispositif d'exploration opto-électrique (45) comporte une matrice d'éléments photosensibles (46) disposés sur un substrat (58), les éléments (46) de chacune des colonnes de la matrice (45) étant reliés à un premier ensemble de lignes communes (48 ... 51) qui sont raccordées à un générateur de balayage vertical (51) et les éléments (46) de chacune des rangées de la matrice (45) étant reliés à un deuxième ensemble de lignes communes (53 ... 56) qui sont raccordées à un générateur de balayage horizontal (57), que tous les éléments photosensibles (46) sont recouverts de masques à filtres de couleur (47) individuels correspondant aux couleurs d'encre d'impression, la répartition des couleurs des filtres (47) variant uniformément sur la surface de la matrice (45), et que le substrat (58) est raccordé au circuit de commande (59) qui est déclenché par un générateur d'horloge (60) qui commande aussi les deux générateurs de balayage (52 et 57) conformément à l'horloge (figure 7).

FIG. 1

FIG. 3

MAGENTA
GELB
CYAN
ROT
BLAU
GRÜN
SCHWARZ

FIG. 4          FIG. 5          FIG. 6

FIG. 2

TROPFENFREQ.

TINTENDRUCK

ABLENKUNG

DRUCKKOPF-
TRANSPORT

TROPFENFREQ.

TINTENDRUCK

ABLENKUNG

59 DRUCKKOPF-
TRANSPORT

60

y

x

48

49

52

53

57

51

56

58

46

47

50

54

45

55

44

25

22

23

FIG. 7